# EUROPEAN PATENT SPECIFICATION

(11) **EP 0 615 504 B1**
(45) Date of publication and mention of the grant of the patent: **04.03.1998**
(21) Application number: 92924812.8
(22) Date of filing: 10.12.1992
(51) Int. Cl.: B63B 59/10, B08B 3/12

(54) **CLEANING AND ETCHING METHODS UTILISING ACOUSTIC FIELDS**
VERFAHREN ZUM REINIGEN UND ÄTZEN UNTER VERWENDUNG VON AKUSTISCHEN FELDERN
PROCEDES DE NETTOYAGE ET D'ATTAQUE CHIMIQUE UTILISANT DES CHAMPS ACOUSTIQUES

(30) Priority: 10.12.1991 GB 9126304
(43) Date of publication of application: 21.09.1994
(73) Proprietor: University of Strathclyde, Glasgow G1 1YQ, Scotland (GB)
(72) Inventor: HAYWARD, Gordon, 2 Clachan, Balfron G63 0NY (GB); ALMAAS, Siv Gjentrude, Dennistoun, Glasgow G31 2NY (GB)
(74) Representative: Shanks, Andrew
(86) International application number: GB9202292
(87) International publication number: WO9311996

(56) References cited:
- EP-A- 0 068 961
- WO-A-86/01171
- GB-A- 2 165 330
- US-A- 4 444 146
- US-A- 4 821 665
- US-A- 4 890 567

## Description

This invention relates to uses of cavitation in liquids, produced by means of acoustic fields. In particular, but not exclusively, the invention relates to the use of focused acoustic fields in the cleaning and etching of surfaces. Further, the invention also relates to the use of cavitation in the treatment of marine life, and to apparatus for use in such methods.

Offshore structures used in oil and gas production are subject to varying degrees of marine fouling. This marine growth impedes inspection of the structure as the majority of inspection techniques require access to a relatively clean surface. More particularly, inspection methods, such as Eddy current and magnetic particle inspection for location of surface breaking flaws, and ultrasonics for detection of internal flaws and detection of flooded members, require a good surface contact to produce reliable test results. Accordingly, to allow inspection the structure must be cleaned prior to the inspection being carried out.

Marine fouling is generally classified as being either hard or soft. Hard marine fouling typically refers to growth such as barnacles, whereas soft marine fouling would be represented by seaweed and the like. Various methods for removing this growth, or discouraging settlement, have been considered and among the more popular methods used are manual scrapers and brushes, water jetting and rotary brushes. However, while these methods provide relatively efficient means for removal of soft fouling, they are generally unsatisfactory for removing hard fouling. Further, at present, most offshore inspection and cleaning operations require some degree of diver intervention and such work can be dangerous and is also relatively expensive.

Utilising ultrasonics for cleaning offshore structures has been proposed in US-A-4,444,146 and GB-A-2 165 330. In US-A-4,444,146 a plurality of ultrasonic transducer elements provide beams of ultrasonic energy which are focused as a narrow band extending along a zone of cavitation. The energization of the transducers is at a level just below the onset of cavitation at their faces, but results in cavitation where their beams overlap. The transducer elements are mounted in a housing which is movable over a surface to be cleaned. In GB-A-2 165 330 an array of individual transducers is mounted on a part-spherical dish so as to be directed to a common centre or focus. The dish is mounted on a remotely controlled vehicle controlled to progress over an area of a surface to be cleaned.

EP-A-0 068 961 describes an ultrasonic heating apparatus for use on the body. The apparatus includes a circular piezo-electric element sub-divided into annular rings, the activation of each ring being individually controlled.

According to one aspect of the present invention there is provided a cleaning or etching method comprising:
providing an array of transducer elements;
controlling the timing of the activation of the respective transducer elements to provide constructive interference at a point of focus adjacent the surface of an object to be cleaned or etched which is immersed in a liquid;
producing cavitation in the liquid at the point of focus; and
varying the timing of the activation of the respective transducer elements to move the point of focus relative to the object to be cleaned.

The power, frequency and other parameters of the field may be varied according to the particular application of the method. If the method is used in a cleaning operation on an offshore structure the selected parameter will vary depending on the material to be removed: removal of hard fouling such as barnacles will tend to require less power than the removal of soft fouling, such as seaweed. Also, selected power levels will remove surface corrosion from metal structures.

For use in cleaning offshore structures, the method is preferably implemented using a remotely operated vehicle (ROV) including means for producing the acoustic field and means for positioning the vehicle on the structure. As the method does not produce any significant reaction force it is not necessary to mount the vehicle as securely as a vehicle utilising, for example, an abrasive cleaning method. A vehicle for carrying out such a cleaning operation may also be provided with means for effecting physical removal of the fouling from the object being cleaned; the focused acoustic field will loosen fouling, but may not actually remove the fouling from the object. The vehicle may further include appropriate sensors for use in determining the condition or integrity of the cleaned structure: Eddy current and magnetic particle inspection techniques may be utilised for location of surface breaking flaws, and ultrasonic techniques may be used for inspection of internal flaws and in flooded member detection.

The location of the focus relative to the surface of the object to be cleaned may be moved axially or along the surface during a cleaning operation to obviate any difficulty in accurately locating the focus at an optimum location for cleaning.

In addition to cleaning the surface of an object, the method of the present invention also has application in the etching of surfaces, notably metals. By moving the focus of the acoustic field in a predetermined pattern over the surface of an object to be etched it is possible to produce a desired surface pattern or configuration.

In a further aspect of the present invention there is provided apparatus for providing cavitation in a liquid comprising:
an array of transducer elements; and
control means for (i) controlling the timing of the activation of the transducer elements to provide constructive interference at a desired point of focus and (ii) varying the timing of the activation of the respective transducer elements to move the point of focus.

In the preferred arrangement a plurality of transducer elements are located in a planar arrangement of concentric rings. Axial focusing of the acoustic outputs of the elements is achieved by use of time delay activation of the rings. Preferably, the control means allow axial movement of the focus.

The transducer elements are preferably mass-spring mode piezoelectric transducer elements. The control means provides the excitation signal and the necessary time delay focusing. Preferably, the acoustic field formed has a smooth, lobe free field profile with a sharply focused central peak.

Circular type arrays are preferred as they are relatively simple to focus, though square and rectangular the dimensional array structures may also be utilised, but would require more complex timing circuitry.

These and other aspects of the present invention will now be described, by way of example, with reference to the accompanying drawings, in which:
Figure 1 is a schematic view of an acoustic cleaning system in accordance with a preferred embodiment of the present invention;
Figure 2 is a view of a transducer array of the cleaning system of Figure 1;
Figure 3 is a schematic representation of the array controller of the cleaning system of Figure 1.
Figure 4 is a schematic illustration of the counter section of the array controller of Figure 3; and
Figure 5 is a schematic representation of the memory device of the array controller of Figure 3.

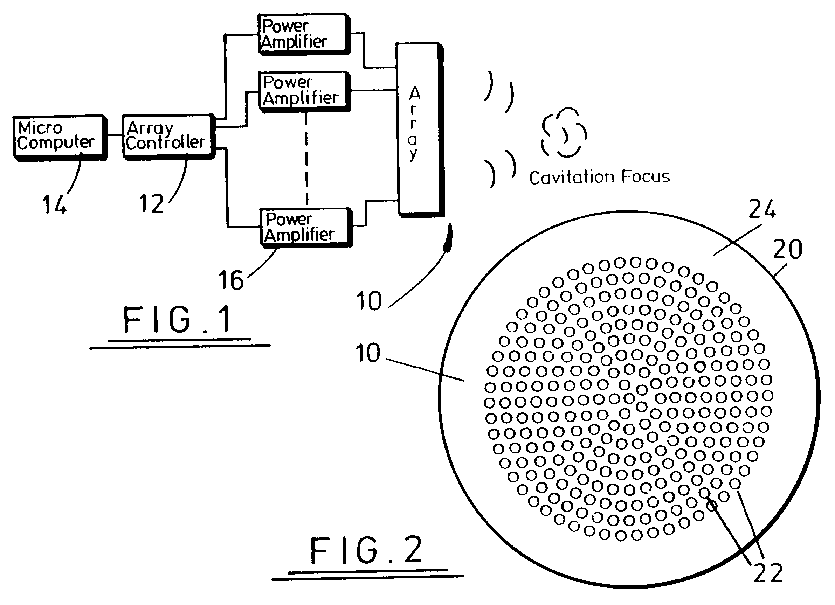

Reference is first made to Figure 1 of the drawings which illustrates, in schematic form, an acoustic cleaning system in accordance with a preferred embodiment of the present invention. Where the cleaning system is utilised in the removal of marine fouling of offshore structures, part of the system will be mounted on a remotely operable vehicle (ROV) capable of location on portions of a structure. Although not described in any detail herein, such a vehicle would also preferably be provided with mechanical cleaning means for brushing off fouling loosened through use of the illustrated system and also inspection apparatus for checking the integrity of the cleaned portions of structure.

The system includes a transducer array 10, and array controller 12 and a master controller in the form of a micro-computer 14. Signals from the array controller 12 are also amplified by means of respective amplifiers 16.

The transducer array 10 is illustrated in Figure 2 of the drawings and includes a planar, circular mounting structure 20 which accommodates a plurality of transducer elements 22 arranged in nine concentric rings. In operation, the array control provides axial focusing of the acoustic fields create by the individual elements. The array controller 12 generates the excitation signal and performs the necessary time delay focusing, both of which are variable. A nine channel, software controlled system operating from the micro-computer 14 separately drives each ring of the array. As will be described, each channel contains a memory section for storage of the digitized signal waveform for each transducer and a counter section, used for transmission control, is common to all channels.

Focussing is achieved by relative time displacement of the excitation signals for each ring. Time delays for a given focussing situation are calculated by the system software, and included in the stored signal for the respective channels.

The individual transducer elements 22 are spaced apart by one wave length. For high cavitation performance it is desirable that the system produces a smooth, lobe free field profile with a sharply focused central peak. Other, non circular array structures could be controlled to provide a field of this form, though, for example, square and rectangular two dimensional array structures require more complex electronic timing circuitry than a circular type array.

The transducer elements 22 are each 25 millimetres in diameter and are mounted within a PVC transducer housing 24 strengthened by a steel back plate. The assembly is bolted together using stainless steel headcap screws around the periphery of the housing 24 and at selected positions on the face of the array 10. The transducer elements 22 are contained within a circular area of 570 millimetres diameter, while the array housing 24 has a diameter of 700 millimetres and a thickness of 100 millimetres.

For complete flexibility in steering and focusing the acoustic field produced by the transducers, each transducer element 22 would require independent timing circuitry and signal amplification. However, a considerable reduction in electronic circuit complexity is available by simply employing axial focusing, with electronically variable focal length. Mass-spring mode piezoelectric transducer elements are utilised and allow a single power amplifier to provide effective excitation for up to six individual transducer elements. The elements 22 are arranged on the array 10 in concentric rings comprising multiples of six elements to minimise design and manufacturing costs. The centre element is grouped with the first ring which contain five elements, the remaining annuli containing N*6 elements, N being the ring number. The preferred embodiment has a total of 270 transducer elements.

To meet cavitation requirements, each power amplifier unit 16 is capable of delivering 60 Watts electrical power to the respective six transducer elements. Each amplifier 16 is rated for a maximum input signal amplitude of 5V p-p and each amplifier unit is individually matched to the respective set of transducers, though testing has shown that an input amplitude level of 4V p-p is sufficient for production of cavitation at the transducer front face when all six elements are excited simultaneously.

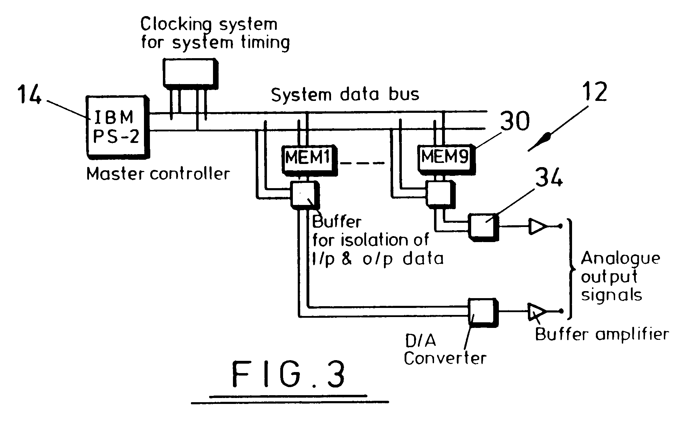

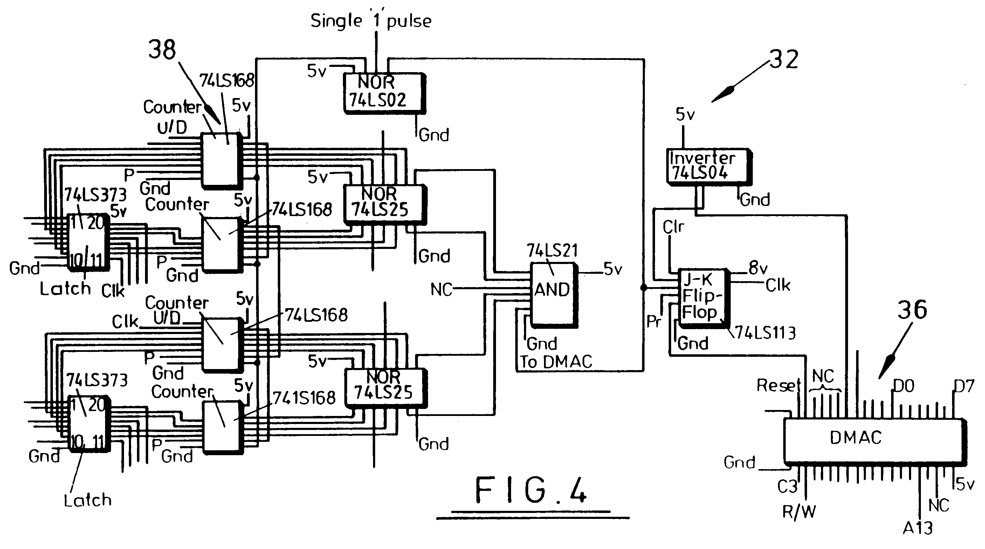

The array controller 12 generates the excitation signal for the transducer elements 22 and performs the necessary time delay focussing. Variable control of the excitation signal and time delay focussing is achieved using a software controlled, digital system using digital analogue converters at the system output stage to supply the transducers with the required analogue excitation signal, via the power amplifiers. The preferred controller 12, as illustrated in Figure 3 of the drawings contains a memory section 30 for storage of the digitized signal waveform, and a counter section 32 (Figure 4) for transmission timing control. The hardware is designed to interface with the micro-computer 14, in this example an IBM PS2, using software to calculate the signal and focussing parameters, load the memory and timing devices, and control start up and interruption of the transmission mode. Based on a 50kHz transducer signal, a 2MHz clock rate produces acceptable signal resolution.

The control system is split into nine channels, each serving a separate array ring. Each channel contains a memory device 30 and a digital to analogue converter (DAC) 34. The memory employed is 8 bit x 8k samples, static, random access memory (RAM) 30. This is sufficient for signal pulse lengths of up to 4ms. The signal data thus stored in consecutive memory addresses and 8 bit data are capable of producing 256 signal levels, or, in bipolar range, ±127. The full range of signal levels is designed to correspond to a ±2.5V signal at the system output stage.

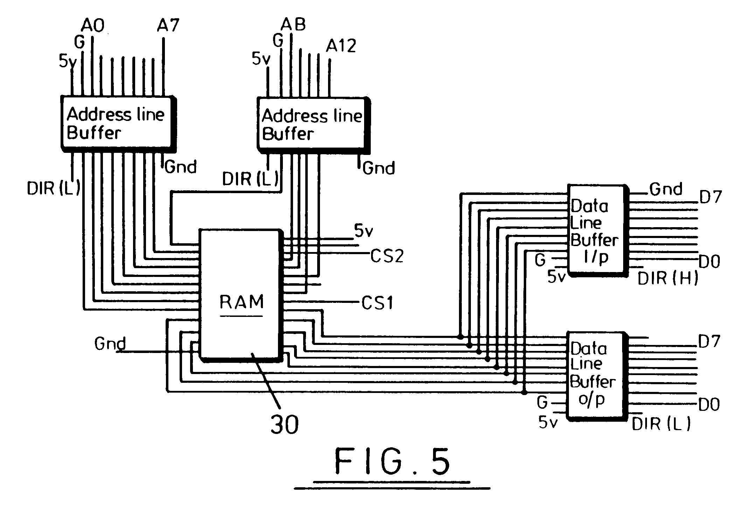

As illustrated in Figure 5 of the drawings, every memory device 30 is buffered to separate the data pass used during loading and transmission loads.

The counter section of the controller is common to all channels, and is illustrated in Figure 4 of the drawings. It contains a direct memory access controller (DMAC) 36 and programmable counters 38 for controlling the signal transmission. Using sixteen bit (4x4bit) programmable counters 38 to control the overall signal repetition rate, a period of up to 32ms is obtainable. When initialised, the DMAC 36 controls the memory location addresses for a complete pulse length, clocking at a rate of 2MHz. The operation is then halted for the remainder of the signal period. A controlled signal generated by the counters restarts DMAC operation and both the DMAC 36 and the counters 38 are automatically reloaded with the required parameters allowing a signal with controllable period and duty cycle to be maintained indefinitely.

The DMAC 36 has a number of internal registers determining its operations and these are loaded from the micro-computer 14. Similarly, the counters 38 are programmed from the micro-computer 14 with the overall signal period.

The system is programmed to produce a gated signal of variable period and pulse length and the software may generate a sinousidol or triangular waveform. An exponential on/off ramp may also be superimposed.

In operation, the focus of the acoustic field is located preferably around .3 metres from the array 10, at the front face of the portion of the structure to be cleaned. The timing delays as calculated (Exact), set by the hardware (Dig), and measured at the analogue means (Meas) for 0.3 m and also 0.6m and 1.0m focussing range are shown on table 1 below. As the effectiveness of the cleaning depends to a significant extent on the correct location of the focus of the field and the subsequent cavitation produced, in the majority of applications it is desirable to move the focus axially to ensure that, at least at one point, the focus is at the desired location. Testing will indicate the most appropriate amplitude and time period necessary to loosen different forms of fouling, to allow efficient operation for specific applications.

The power required to drive the system will also be determined by the cleaning effect desired; increased power levels may lead to the removal of corrosion or corrosion protecting coatings from the elements of the structure being cleaned, in addition to loosening the marine fouling.

The apparatus may also be utilised in other applications, including the etching of metals where relatively high power levels may be used to etch a metal surface. Through relative movement of the transducer array 10 and the object being etched, a desired surface appearance may be obtained.

**TABLE 1**

| Ch no. | O.3m | | | O.6m | | | 1.0m | | |
|---|---|---|---|---|---|---|---|---|---|
| | Exact | Dig | Meas | Exact | Dig | Meas | Exact | Dig | Meas |
| 1 | 68.07 | 68.0 | 68.1 | 38.13 | 38.0 | 38.0 | 23.57 | 23.5 | 23.6 |
| 2 | 65.11 | 65.0 | 65.1 | 36.64 | 36.5 | 36.5 | 22.67 | 22.5 | 22.5 |
| 3 | 60.27 | 60.5 | 60.5 | 34.16 | 34.0 | 34.0 | 21.18 | 21.0 | 21.0 |
| 4 | 53.67 | 53.5 | 53.5 | 30.71 | 30.5 | 30.4 | 19.09 | 19.0 | 19.0 |
| 5 | 45.47 | 45.5 | 45.6 | 26.32 | 26.5 | 26.5 | 16.41 | 16.5 | 16.4 |
| 6 | 35.83 | 36.0 | 36.0 | 21.02 | 21.0 | 21.0 | 13.16 | 13.0 | 13.0 |
| 7 | 24.94 | 25.0 | 25.0 | 14.84 | 15.0 | 14.9 | 9.33 | 9.5 | 9.5 |
| 8 | 12.95 | 13.0 | 13.0 | 7.82 | 8.0 | 8.0 | 4.94 | 5.0 | 5.0 |
| 9 | 0.0 | 0.0 | 0.0 | 0.0 | 0.0 | 0.0 | 0.0 | 0.0 | 0.0 |

## Claims

1. A cleaning or etching method comprising:
providing an array of transducer elements;
controlling the timing of the activation of the respective transducer elements to provide constructive interference at a point of focus adjacent the surface of an object to be cleaned or etched which is immersed in a liquid;
producing cavitation in the liquid at the point of focus; and
varying the timing of the activation of the respective transducer elements to move the point of focus relative to the object to be cleaned.

2. The method of claim 1 wherein the location of the focus is moved axially relative to the object.

3. The method of claim 1 or 2 wherein the location of the point of focus is moved across the surface of the object to be cleaned.

4. The method of claim 3 wherein the location of the focus is moved in a predetermined path over the surface of the object to produce a desired surface pattern or configuration.

5. Apparatus for providing cavitation in a liquid comprising:
an array of transducer elements; and
control means for (i) controlling the timing of the activation of the transducer elements to provide constructive interference at a desired point of focus and (ii) varying the timing of the activation of the respective transducer elements to move the point of focus.

6. The apparatus of claim 5 wherein the transducer elements are located in a planar arrangement of concentric rings.

7. The apparatus of claim 6 wherein the acoustic outputs of the transducer elements are axially focused by time-delay activation of the rings.

8. The apparatus of claim 7 wherein the time-delay between ring activations is variable, to allow axial movement of the point of focus.

9. The apparatus of any one of claims 5 to 8 wherein the transducer elements are mass-spring mode piezo-electric transducer elements.

10. The apparatus of claim 9 wherein the control means provides the excitation signals for the transducer elements.

11. The apparatus of any one of claims 5 to 10 wherein the apparatus is mounted on a remotely operable vehicle including means for positioning the vehicle on a structure.

12. The apparatus in combination with the remotely operable vehicle of claim 11 and further including means for effecting physical removal of fouling from a structure.

13. The apparatus in combination with the vehicle of claim 11 or 12 and further including sensors for determining the condition or integrity of a structure.

## Patentansprüche

1. Reinigungs- oder Ätzverfahren mit den folgenden Schritten:
Bereitstellen einer Matrix von Ultraschallgenerator(Transducer)elementen;
Steuerung des Zeitablaufs der Aktivierung der jeweiligen Ultraschallgeneratorelemente zum Erzeugen einer konstruktiven Interferenz an einem Brennpunkt in unmittelbarer Nähe der Oberfläche eines zu reinigenden oder zu ätzenden Gegenstands, der in eine Flüssigkeit eingetaucht ist;
Erzeugen einer Kavitation in der Flüssigkeit an dem Brennpunkt; und
Variieren des Zeitablaufs der Aktivierung der jeweiligen Ultraschallgeneratorelemente, um den Brennpunkt gegenüber dem zu reinigenden Gegenstand zu verschieben.

2. Verfahren nach Anspruch 1, wobei der Ort des Brennpunkts gegenüber dem Gegenstand axial verschoben wird.

3. Verfahren nach Anspruch 1 oder 2, wobei der Ort des Brennpunkts quer über die Oberfläche des zu reinigenden Gegenstands verschoben wird.

4. Verfahren nach Anspruch 3, wobei der Ort des Brennpunkts auf einem vorgegebenen Weg über die Oberfläche des Gegenstands verschoben wird, um eine gewünschte Oberflächenstruktur oder -konfiguration zu erzeugen.

5. Vorrichtung zum Erzeugen von Kavitation in einer Flüssigkeit, wobei die Vorrichtung aufweist:
eine Matrix von Ultraschallgeneratorelementen; und
eine Steuereinrichtung zum (i) Steuern des Zeitablaufs der Aktivierung der Ultraschallgeneratorelemente zur Erzeugung einer konstruktiven Interferenz an einem gewünschten Brennpunkt und (ii) zum Variieren des Zeitablaufs der Aktivierung der jeweiligen Ultraschallgeneratorelemente, um den Brennpunkt zu verschieben.

6. Vorrichtung nach Anspruch 5, wobei die Ultraschallgeneratorelemente in einer ebenen Konfiguration aus konzentrischen Ringen angeordnet sind.

7. Vorrichtung nach Anspruch 6, wobei die akustischen Ausgangsleistungen der Ultraschallgeneratorelemente durch zeitverzögerte Aktivierung der Ringe axial fokussiert werden.

8. Vorrichtung nach Anspruch 7, wobei die Zeitverzögerung zwischen Ringaktivierungen variabel ist, um eine axiale Verschiebung des Brennpunkts zu gestatten.

9. Vorrichtung nach einem der Ansprüche 5 bis 8, wobei die Ultraschallgeneratorelemente im Masse-Feder-Betrieb arbeitende piezoelektrische Ultraschallgeneratorelemente sind.

10. Vorrichtung nach Anspruch 9, wobei die Steuereinrichtung die Anregungssignale für die Ultraschallgeneratorelemente liefert.

11. Vorrichtung nach einem der Ansprüche 5 bis 10, wobei die Vorrichtung auf einem fernsteuerbaren Träger montiert ist, der eine Einrichtung zum Positionieren des Trägers auf einer Struktur aufweist.

12. Vorrichtung in Kombination mit dem fernsteuerbaren Träger nach Anspruch 11, die ferner eine Einrichtung zum physischen Entfernen von Verschmutzungen von einer Struktur aufweist.

13. Vorrichtung in Kombination mit dem Träger nach Anspruch 11 oder 12, die ferner Sensoren zur Bestimmung des Zustands oder der Unversehrtheit einer Struktur aufweist.

## Revendications

1. Procédé de nettoyage ou d'attaque chimique comprenant:
fourniture d'un ensemble d'éléments transducteurs;
commande de la synchronisation de l'actionnement des éléments transducteurs respectifs pour assurer une interférence constructive au niveau d'un point de focalisation adjacent à la surface d'un objet devant être nettoyé ou soumis à une attaque chimique, immergé dans un liquide;
production d'une cavitation dans le liquide au niveau du point de focalisation; et
variation de la synchronisation de l'actionnement des éléments transducteurs respectifs pour déplacer le point de focalisation par rapport à l'objet devant être nettoyé.

2. Procédé selon la revendication 1, dans lequel l'emplacement du foyer est déplacé axialement par rapport à l'objet.

3. Procédé selon les revendications 1 ou 2, dans lequel l'emplacement du point de focalisation est déplacé à travers la surface de l'objet devant être nettoyé.

4. Procédé selon la revendication 3, dans lequel l'emplacement du foyer est déplacé dans une voie prédéterminée au-dessus de la surface de l'objet, pour produire un dessin ou une configuration de surface voulus.

5. Dispositif destiné à produire une cavitation dans un liquide, comprenant:
un ensemble d'éléments transducteurs; et
un moyen de commande pour (i) assurer la commande de la synchronisation de l'actionnement des éléments transducteurs pour entraîner une interférence constructive au niveau d'un point de focalisation voulu et (ii) varier la synchronisation de l'actionnement des éléments transducteurs respectifs pour déplacer le point de focalisation.

6. Dispositif selon la revendication 5, dans lequel les éléments transducteurs sont disposés dans un agencement plan d'anneaux concentriques.

7. Dispositif selon la revendication 6, dans lequel les sorties acoustiques des éléments transducteurs sont focalisées axialement par un actionnement retardé des anneaux.

8. Dispositif selon la revendication 7, dans lequel le temps de retard entre l'actionnement des anneaux est variable pour permettre un déplacement axial du point de focalisation.

9. Dispositif selon l'une quelconque des revendications 5 à 8, dans lequel les éléments transducteurs sont des éléments transducteurs piézo-électriques du type masse-ressort.

10. Dispositif selon la revendication 9, dans lequel le moyen de commande transmet des signaux d'excitation aux éléments transducteurs.

11. Dispositif selon l'une quelconque des revendications 5 à 10, dans lequel le dispositif est monté sur un véhicule actionnable à distance, englobant un moyen pour positionner le véhicule sur une structure.

12. Dispositif en combinaison avec le véhicule actionnable à distance selon la revendication 11, englobant en outre un moyen pour assurer l'élimination physique de la salissure d'une structure.

13. Dispositif en combinaison avec le véhicule selon les revendications 11 ou 12, englobant en outre des capteurs pour déterminer l'état ou l'intégrité d'une structure.
